Europäisches Patentamt

European Patent Office

Office européen des brevets

(11) Veröffentlichungsnummer: **0 007 469**
**A1**

## (12) EUROPÄISCHE PATENTANMELDUNG

(21) Anmeldenummer: **79102218.9**

(22) Anmeldetag: **02.07.79**

(51) Int. Cl.³: **A 22 B 7/00**
**A 22 B 5/16, B 65 G 19/02**

(30) Priorität: **07.07.78 DE 2829883**

(43) Veröffentlichungstag der Anmeldung:
**06.02.80 Patentblatt 80/3**

(84) Benannte Vertragsstaaten:
**AT BE CH FR GB IT LU NL SE**

(71) Anmelder: **Vogt-Werke GmbH u. Co. KG**

**D-6490 Schlüchtern(DE)**

(72) Erfinder: **Fahrein, Horst**
**Hainwiesenweg 28**
**D-6490 Schlüchtern(DE)**

(74) Vertreter: **Strasse, Joachim, Dipl.-Ing. et al,**
**Zweibrückenstrasse 15**
**D-8000 München 2(DE)**

(54) Schlachtstrasse.

(57) Schlachtstrasse, wobei das Schlachtvieh (12) am Fleischhaken (32) hängt, die an einer Rohr- oder Profilbahn (10) entlang bewegt werden um nacheinander verschiedenen Arbeitsplätzen u.a. einer Enthäutungsstelle (36) zugeführt zu werden. Die Enthäutung erfolgt von oben nach unten mit Hilfe einer am Boden angeordneten Aufwickelrolle (40). Um einen hinreichenden Abstand zwischen Tierende und Boden zu schaffen ist ein Abschnitt (16) der Transportbahn (10) im Bereich des Enthäuters (36) anhebbar ausgebildet so dass, das Schlachtvieh (12) auf eine Höhe angehoben wird, die es gestattet, dass die Rolle (40) zur Aufnahme der Haut (38) unterhalb des Tierkopfes angeordnet werden kann.

./...

EP 0 007 469 A1

Croydon Printing Company Ltd.

- 1 -

## S C H L A C H T S T R A S S E

Die Erfindung bezieht sich auf eine Schlachtstraße mit einer Transportbahn für Schlachtvieh und im Abstand dazu angeordnetem Förderband.

Bei den heutzutage verwendeten Schlachtstraßen wird das Schlachtvieh an Fleischhaken befestigt, die auf einer Rohr- oder Profilbahn entlangbewegt werden, um vom Arbeitsplatz zu Arbeitsplatz bewegt zu werden. Dabei greifen normalerweise oberhalb der Transportbahn angeordnete und von einem Förderband bewegte Mitnehmer in die auf der Rohrbahn sich bewegenden Fleischhaken ein, so daß bei Bewegen der Mitnehmer ein Transport des Schlachtviehs erfolgt. Bei den Arbeitsplätzen, wie z. B. Anheben, Brustbeinsägen, Organentnahme oder Spalten muß der Abstand zwischen Boden und Rohrbahn zumindest die Höhe aufweisen, damit das Schlachtvieh ohne Bodenberührung frei bewegt werden kann.

Soll dagegen eine vollständige Enthäutung des Schlachtviehs von oben nach unten erfolgen, muß außerdem ein zusätzlicher Abstand zwischen Tierende und Boden vorhanden sein, damit dort die Aufwickelrolle von bekannten Enthäutevorrichtungen angeordnet werden kann. Bei vielen Schlachtstraßen ist jedoch für das Anordnen der Enthäutevorrichtung kein Platz für eine optimale Enthäutung. Um dennoch ein Enthäuten über den ganzen Körper und insbesondere den Kopt des Schlachttieres hinweg zu ermöglichen, muß entweder die gesamte Rohrbahn ab Umhängung mit dazu im Abstand angeordnetem Förderband angehoben werden, um die erforderliche Höhe zu erzielen, oder es muß am Arbeitsplatz des Enthäutens eine Grube ausgehoben werden. Beide Lösungsmöglichkeiten sind mit hohen Kosten verbunden. Zum Teil ist ein solches Umrüsten aus Platzgründen nicht möglich. So kann ein Ausheben einer Grube dadurch verwehrt sein, daß der Boden einen solchen Aushub nicht zuläßt, wenn z. B. der erforderliche Raum nicht vorhanden ist, oder eine Zwischendecke nicht versetzt werden kann.

Es ist Aufgabe der vorliegenden Erfindung, eine Schlachtstraße dergestalt auszubilden, daß stets eine Enthäutevorrichtung als Arbeitsplatz eingebaut werden kann, bei der die Haut insbesondere über den ganzen Kopf abgezogen wird. Dazu soll das Umrüsten einer vorhandenen Schlachtstraße möglichst kostengünstig erfolgen, ohne daß die Gesamtanordnung wesentlich verändert wird.

Die Aufgabe wird erfindungsgemäß dadurch gelöst, daß zumindest ein Abschnitt der Transportbahn anhebbar ist. Dadurch ergibt sich die Möglichkeit, daß das Schlachtvieh am Ort der Enthäutevorrichtung auf eine Höhe angehoben wird, die es gestattet, daß die Rolle zur Aufnahme der Haut tiefer als das Ende oder als der Kopf des Schlachtviehs angeordnet werden kann. Durch die erfindungsgemäße Schlachtstraße ist ein Anheben dieser in ihrer Gesamtheit ebensowenig notwendig wie das Ausheben einer Grube. Auch bei neuen Installationen kann bei beengten Raumverhältnissen in der erreichbaren Höhe die anhebbare Transportbahn nützlich sein. Vorzugsweise ist der anhebbare Abschnitt in seiner Grundstellung zu den angrenzenden Transportbahnteilen vom Förderband weg versetzt angeordnet. Dadurch ergibt sich die Möglichkeit, daß das Förderband mit gleichbleibender Geschwindigkeit bewegt werden kann, ohne daß die Mitnehmer in die Fleischhaken eingreifen, also ein Bewegen des am Arbeitsplatz der Enthäutung befindlichen Schlachtviehs erfolgt. Vorzugsweise schließen sich beidseitig fluchtend
an den anhebbaren Abschnitt in seiner Grundstellung
stationäre Abschnitte an. Um die Fleischhaken in Eingriff mit den Mitnehmern nach erfolgter Enthäutung zu
bringen, weist der in Transportrichtung an dem anhebbaren Abschnitt angrenzende Abschnitt an seinem Ende
oder nahezu an seinem Ende eine Anhebevorrichtung auf,
um ein Niveauausgleich zwischen der angrenzenden Transportbahn und dem Abschnitt selbst herbeizuführen. Durch
den durch die Anhebevorrichtung erzielten Niveauausgleich werden die Fleischhaken von den vom Förderband bewegten Mitnehmern mitgenommen, wodurch das Schlachtvieh zur nächsten Arbeitsstation transportiert werden
kann. Um einen ruckartigen Übergang von der Transportbahn zu dem anhebbaren Abschnitt zu vermeiden, ist der
Übergang zwischen Transportbahn und dem sich anschließenden mit dem anhebbaren Abschnitt in seiner Grundstellung
fluchtenden Abschnitt stetig in Form einer Schräge ausgebildet.

Wird als Förderband ein Taktförderband verwendet, so kann
selbstverständlich der anhebbare Abschnitt fluchtend mit
der Transportbahn angeordnet sein. Auch können in Ausgestaltung der Erfindung die sich an den anhebbaren Abschnitt anschließenden Abschnitte dadurch ersetzt werden,
daß die Transportbahn selbst unmittelbar an den anhebbaren Abschnitt herangeführt wird.

Der anhebbare Abschnitt ist mechanisch z. B. über pneumatische bzw. hydraulische Zylinder oder über eine Hubwinde mittels entsprechender Übertragsorgane anhebbar.
Auch kann der Abschnitt über einen hydraulischen Drehzylinder angehoben werden.

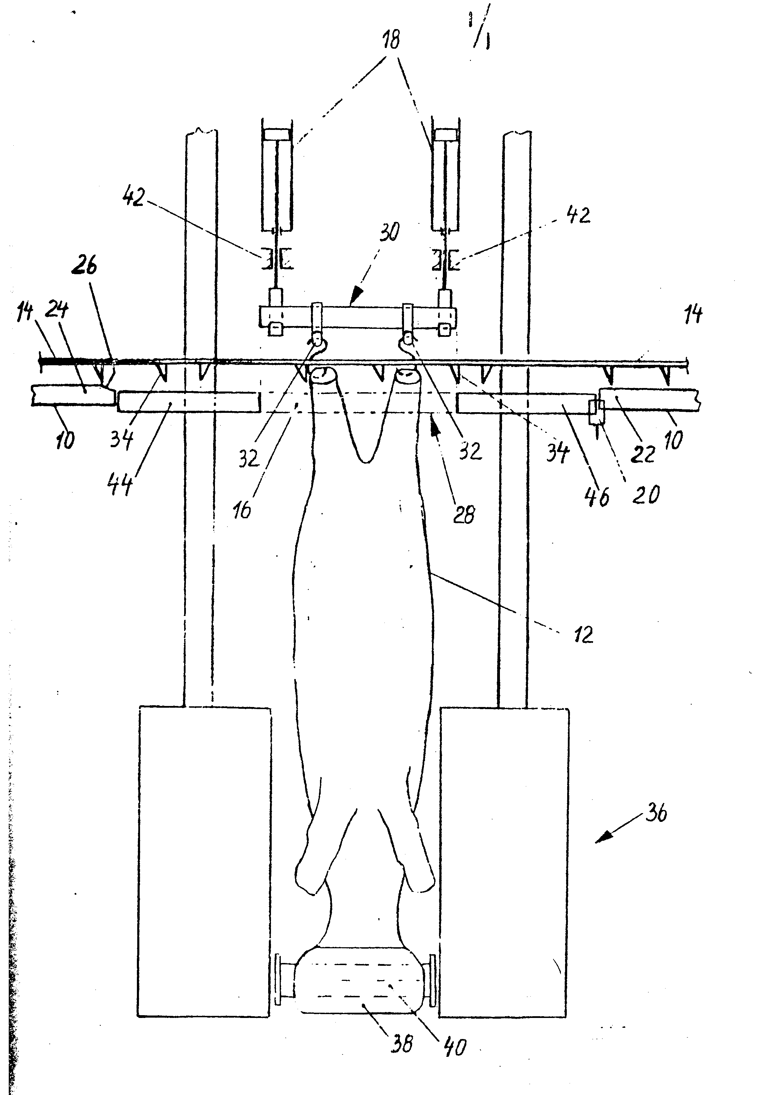

Weitere Einzelheiten, Vorteile und Merkmale der Erfindung
ergeben sich aus der nachfolgenden Beschreibung der einzigen Figur. Das stark vereinfachte zeichnerische Ausführungsbeispiel zeigt einen Ausschnitt einer Schlachtstraße mit einer Rohrbahn 1o, an die Fleischhaken 32 gehängt werden, an welche wiederum Schlachttiere 12 befestigt sind. Zum automatischen Transport ist oberhalb der Rohrbahn 1o z. B. ein endloser Kettenantrieb 14 als Förderband mit einem nicht dargestellten Antriebsaggregat vorgesehen. Zur Mitnahme der Haken 32 sind in vorgegebenen Abständen am Förderband 14 Mitnehmer 34 vorgesehen, welche bis auf die Rohrbahn 1o ragen und gegen einen oberen Teil der Haken 32 stoßen.

In der Zeichnung ist des weiteren schematisch ein Arbeitsplatz dargestellt, an dem das Schlachtvieh 12 enthäutet wird. Um eine vollständige Enthäutung von oben nach unten über den Kopf des Schlachttieres 12 vornehmen zu können, muß eine Rolle 4o zwischen Boden und Kopf bewegt werden können. Auf diese Rolle 4o wird nämlich die Haut 38 aufgewickelt. Ist nun der Abstand zwischen Rohrbahn 1o und Boden zu gering, damit die Rolle 4o zwischen Kopf und Boden gebracht werden kann, so muß das Schlachtvieh 12 angehoben werden. Dazu weist die Rohrbahn 1o einen Abschnitt 16 auf, der anhebbar ist. An den anhebbaren Abschnitt 16 schließen sich fluchtend zwei weitere Abschnitte 44 und 46 an. Die Abschnitte 44 und 46 sind stationär angeordnet.

In seiner Grundstellung 28 ist der Abschnitt 16 nicht fluchtend mit der Rohrbahn 1o, sondern vom Förderband 14 weg versetzt angeordnet. Dadurch können die Mitnehmer 34 nicht mehr mit den Haken 32 in Eingriff kommen, wenn sich das Schlachtvieh auf den Rohrbahnabschnitten 16, 44, 46 befindet. Daraus ergibt sich der Vorteil, daß das Förderband kontinuierlich weiterbewegt werden kann, ohne daß es angehalten werden muß, um das Schlachtvieh 12 zu enthäuten. Nachdem das Schlachtvieh 12 über den Abschnitt 44 in die richtige Position auf dem anhebbaren Rohrbahnabschnitt 16 im Verhältnis zur Rolle 4o bewegt worden ist, kann der Abschnitt 16 z. B. über pneumatische oder hydraulisch betätigbare  Zylinder 18 in eine Position 30 angehoben wer-

den. In dieser Position 3o ist der freie Raum zwischen Kopf und Boden unterhalb der Schlachtstraße hinreichend groß, um die Rolle 4o zum vollständigen Enthäuten in die richtige Stellung zu bringen. Um ein unerwünschtes Verschwenken des Rohrbahnabschnitts 16 beim Anheben zu verhindern, können Führungselemente 42 im Hubweg des Abschnitts 16 angeordnet sein. Nach erfolgter Enthäutung, nachdem also die Haut 38 auf die Rolle 4o gewickelt ist, kann der Abschnitt 16 in seine Grundstellung 28 zurückbewegt werden, damit das Schlachtvieh anschließend den weiteren Bearbeitungsstationen zugeführt werden kann. Damit die Mitnehmer 34 erneut in Kontakt mit den Haken 32 gelangen, wird das Schlachtvieh 12 vom anhebbaren Abschnitt 16 über den angrenzenden und fluchtenden Abschnitt 46 in Transportrichtung des Förderbandes bewegt und gelangt in Eingriff mit einer Anhebevorricht 2o. Diese Anhebevorrichtung 2o hebt den Haken 32 auf das Niveau des an den Abschnitt 46 angrenzenden Rohrbahnabschnitts 22, so daß Mitnehmer 34 erneut an die oberen Teile der Haken 32 stoßen und somit das Schlachtvieh 12 transportiert werden kann. Der Übergang zwischen dem dem vorderen Ende des Abschnitts 44 zugewandeten Rohrbahnteils 24 und ersterem selbst ist vorzugsweise durch eine Schräge 26 stetig ausgebildet, damit das Schlachtvieh 12 nicht ruckartig von der Rohrbahn 1o auf die dazu versetzten Abschnitte befördert wird, wodurch unnötige Verstärkungen notwendig werden, damit durch die Gewichtsveränderung keine unerwünschte Beschädigung der Rohnbahnteile entsteht.

Patentansprüche:

1. Schlachtstraße mit Transportbahn für Schlachtvieh und im Abstand dazu angeordnetem Förderband, dadurch gekennzeichnet, daß zumindest ein Abschnitt (16) der Transportbahn (1o) anhebbar ist.

2. Schlachtstraße nach Anspruch 1, dadurch gekennzeichnet, daß der anhebbare Abschnitt (16) in seiner Grundstellung (28) zu den angrenzenden Transportbahnteilen (22, 24) versetzt vom Förderband (14) weg angeordnet ist.

3. Schlachtstraße nach Anspruch 1 und/oder Anspruch 2, dadurch gekennzeichnet, daß sich beidseitig fluchtend an dem anhebbaren Abschnitt (16) in seiner Grundstellung (28) stationäre Abschnitte (44,46) anschließen.

4. Schlachtstraße nach Anspruch 1 und/oder einem der folgenden, dadurch gekennzeichnet, daß zumindest der Übergang zwischen einem sich an den anhebbaren Abschnitt (16) anschließenden stationären Abschnitt (44) und einem angrenzenden Transportbahnteil (24) stetig ist.

5. Schlachtstraße nach Anspruch 1 und/oder zumindest einem der nachfolgenden Ansprüche, dadurch gekennzeichnet, daß zum Weitertransport des Schlachtviehs (12) der in Transportrichtung an dem anhebbaren Abschnitt (16) angrenzende Abschnitt (46) an seinem Ende oder nahezu an seinem Ende eine Anhebevorrichtung (20) zum Niveauausgleic h zwischen angrenzender Transportbahn unddem Abschnitt (46) aufweist.

6.  Schlachtstraße nach Anspruch 1,
    dadurch gekennzeichnet,
    daß bei Verwenden eines Taktförderbandes
    der anhebbare Abschnitt (16) fluchtend mit
    der Transportbahn (1o) angeordnet ist.

7.  Schlachtstraße nach Anspruch 1,
    dadurch gekennzeichnet,
    daß der anhebbare Abschnitt (16) mechanisch
    z. B. über pneumatische bzw. hydraulische Zylinder oder über eine Hubwinde mittels ent-
    sprechender Übetragungsorgane anhebbar ist.

Europäisches
Patentamt

**EUROPÄISCHER RECHERCHENBERICHT**

Nummer der Anmeldung

EP 79 10 2218

| Kategorie | Kennzeichnung des Dokuments mit Angabe, soweit erforderlich, der maßgeblichen Teile | betrifft Anspruch |
|---|---|---|
| | **EINSCHLÄGIGE DOKUMENTE** | |
| X | US - A - 3 046 597 (MACY) <br> * Spalte 2, Zeile 20 bis Spalte 3, Zeile 65; Figuren 1,2 * | 1,6,7 |
| X | DE - C - 957 190 (THIER) <br> * Ansprüche * | 1 |
| | US - A - 2 383 835 (ACKERMANN) <br> * Seite 2, linke Spalte, Zeile 23 bis rechte Spalte, Zeile 62; Figur 1 * | 1,6,7 |
| | US - A - 3 261 301 (ZAENKERT) <br> * Spalte 3, Zeilen 44-49; Figur 7 * | 4 |

**KLASSIFIKATION DER ANMELDUNG (Int.Cl. 3)**

A 22 B   7/00
            5/16
B 65 G  19/02

**RECHERCHIERTE SACHGEBIETE (Int. Cl. 3)**

A 22 B
B 65 G
B 61 B

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 10-10-1979 | CRUCHTEN |

EPA form 1503.1  06.78